# EUROPEAN PATENT APPLICATION

(11) **EP 3 556 536 A1**
(43) Date of publication of application: **23.10.2019**
(21) Application number: 18168490.3
(22) Date of filing: 20.04.2018
(51) Int. Cl.: B29C 51/30, B29C 51/10, B29C 51/26, B29L 31/00

(54) **THERMOFORMING MACHINE AND PROCESS**

(71) Applicant: WM Thermoforming Machines SA, 6855 Stabio (CH)
(72) Inventor: GOTTI, Dario, 6855 Stabio (CH)
(74) Representative: Zardi, Marco

(57) **Abstract**

Thermoforming machine and process, wherein a thermoforming mold comprises an array of cavities (21), each of the cavities corresponding to an article to be thermoformed, and at least some of said cavities have an adjustable position inside the thermoforming mold, in particular allowing the cavities to be arranged in a converging trapezium-like configuration.

## Description

### Field of the invention

The present invention relates to a thermoforming machine and a thermoforming process, in particular for the production of plastic articles.

### Prior art

Thermoforming is a known process for hot-molding plastics, used to produce a large number of plastic articles such as plates, cups, trays, tubs, etc.

A sheet of thermoformable material is conveyed into a mold having a certain number of cavities which reproduce the form of the desired articles. The cavities in general follow a square array.

The mold is typically formed by two half-molds, typically a bottom half-mold and a top half-mold, operated by a press.

The cavities may be arranged to form an array such that a working cycle of the press produces a batch of articles (multiple forming).

The sheet may adhere to the cavities under a suction effect (vacuum thermoforming) or under the action of a pressure exerted by a fluid, typically air (pressure thermoforming).

In vacuum thermoforming generally one of the two half-molds contains the cavities and a suitable vacuum system; the other half-mold therefore has a relatively simple design.

In the pressure thermoforming, instead, a "closed" mold is required where both half-molds are airtight and therefore the design of the mold is more complex. Pressure thermoforming, however, is preferable or necessary with materials of a relatively low malleability.

Vacuum thermoforming in fact may apply to the sheet a (negative) pressure whose theoretical maximum value is limited to atmospheric pressure; for some materials this force is not able to ensure the desired adhesion to the cavities and pressure thermoforming is required to apply a greater pressure to the sheet. For example, polypropylene is a material which generally requires pressure thermoforming.

After thermoforming it is known to separate the thermoformed articles from the sheet by means of a punching or cutting operation using a suitable punch/die system. The term punching denotes a process which cuts out the contour of articles without however completely separating the articles from the waste sheet, i.e. leaving some parts of the original sheet (called "indicators") connecting together the articles, such that they may be transported collectively together with the sheet. The term cutting denotes a process which separates completely the articles, such that each of the articles, after the cutting step, constitutes a separate object.

A thermoforming machine extends essentially in a longitudinal direction from a material loading side, for example where a reel of the thermoformable sheet is arranged or where an extruder for the said sheet is present, to a side of collecting and expelling the thermoformed articles. The transportation system of the sheet therefore is arranged to convey the sheet in a forward feeding direction and, in the thermoforming mold, it is possible to define an inlet side, where the sheet of material enters between the two half-molds, and an opposite outlet side of output of the articles.

Downstream of the thermoforming mold a punching or cutting station may be provided.

In some embodiments it is known to perform both thermoforming and cutting inside the same mold.

This technique of combined forming and cutting in a single mold is advantageous because it allows performing two machining steps in a single station of the machine and, in particular, because it avoids the need to remove the articles from the forming mold and the repositioning of the articles with appropriate centering in a cutting mold. However, said technique is not always feasible, mainly because the parts are thermoformed and cut in a single mold and therefore a removal or expulsion member is required to withdraw the single articles from the mold, which may not be easy to implement.

For example, withdrawing the articles from the thermoforming and cutting mold is relatively easy in vacuum thermoforming process, because one of the two half-molds has an open structure which allows a removal member to pass through. In a pressure thermoforming process, on the other hand, both half-molds are sealed and closed and do not allow the withdrawal; in order to expel the parts it is necessary, for example, to open the mold and incline or turn over the bottom half-mold, which requires a tilting movement of the half-mold during each molding cycle, something which slows down the production cycle; moreover it involves putting a large mass into alternating movement, with the associated problems, in particular in machines with a high capacity which must perform several cycles per minute.

For these reasons, in some cases the solution of a separate cutting station downstream of the thermoforming mold is still preferred.

In this case it is desirable to convey the sheet from the thermoforming mold to the cutting mold using the same transportation system which feeds the thermoforming mold. In other words the sheet remains constantly engaged with the transportation system, without leaving it, during the steps of introduction into the thermoforming mold, thermoforming and transportation towards the cutting mold.

However, the sheet inevitably cools during the transfer between the two molds; the consequent shrinkage of the material deforms the semi-finished product, modifies the relative position of the articles already thermoformed and makes more difficult centering the articles in the cutting mold. Lack of a precise centering during the cutting step may result in a non-conformity of the shape of the product or unacceptable quality defects, such as sharp edges.

The term shrinkage indicates, as is known, the deformations induced by cooling of the plastic material. More generally, in addition to affecting centering during the cutting step, a shrinkage of the semi-finished product after thermoforming may produce defects in the finished product, for example may deform the articles.

It has been noted that also the inevitable non-uniformity of temperature in the thermoforming mold may cause tensions and deformations due to shrinkage. The material is generally heated to a high temperature, in order to allow plastic deformation, in a heater located immediately upstream of the mold. Therefore the inlet side of the mold is a "hot" side, while the opposite outlet side of the mold is a "cold" side.

The amount of the shrinkage depends on the material. For example polypropylene (PP) is subject to a shrinkage of approximately 18-20 parts per thousand, which is a relatively high value: it corresponds to about 2 mm per meter; if it is considered that the cutting step must have a very high precision (usually of the order of micrometers), it can be understood that shrinkage poses a major problem.

Moreover, the amount of shrinkage also depends on the specific weight of the material (and therefore the mass of the single articles) which is very variable depending on the applications. For example, there are sheets of multilayer thermoformable material which have an upper layer consisting of a relatively high-quality material (for example food-grade polypropylene) and one or more layers of a less expensive inert material, in order to give rigidity to the finished product. The specific weight of a multilayer material of this type may vary significantly according to the number and the composition of the layers and the degree of shrinkage may vary consequently.

Therefore, the shrinkage is not only significant, but also variable depending on the product made and the thermoformable material used. The machines of the prior art do not yet offer a solution to this problem which is also flexible and adaptable to different features of the materials. It should be considered that there is a growing interest in high-performance multilayer materials specific for the intended use of the articles and, consequently, there is a need to provide thermoforming machines able to adapt to different materials.

### Summary of the invention

The object of the invention is to overcome the limitations and drawbacks of the prior art mentioned further above. The main object of the present invention is to counteract the effects of shrinkage of the material during a thermoforming process. More particularly, an object of the invention is to solve the problem of centering of thermoformed articles for a cutting step in connection with machines and processes which perform thermoforming and cutting in two separate stages. Even more particularly, an object of the invention is to provide a thermoforming machine which is able to maintain correct centering during cutting also when using different materials which have different shrinkage values.

These objects are achieved with a thermoforming machine comprising:
a thermoforming mold;
a transportation system configured to transport a sheet of thermoformable material through said mold in a feeding direction;
wherein said mold comprises an array of cavities, each of the cavities corresponding to an article to be thermoformed;
the machine being characterized in that: at least some of said cavities have a position which is adjustable with respect to said thermoforming mold.

Said adjustable-position molds are termed hereinbelow movable cavities. According to the invention the mold is provided with at least some movable cavities; preferably all the cavities of the mold are movable.

Advantageously, said movable cavities are displaceable (adjustable) along at least a first adjustment axis. Said first adjustment axis is preferably perpendicular to said feeding direction.

More preferably, said movable cavities are displaceable along two axes, preferably two perpendicular axes. In a preferred embodiment, said movable cavities are displaceable along said first adjustment axis perpendicular to the feeding direction and along a second adjustment axis which is perpendicular to the first adjustment axis.

The movable cavities have a predefined adjustment travel along said first axis and, where provided, along said second axis. The adjustment travel may be the same along two axes or, in other embodiments, the adjustment travel permitted along the first axis may be different (greater or smaller) than the adjustment travel allowed along the second axis.

Said movable cavities can be locked in a desired position within the respective adjustment travel.

The cavities may be arranged in an array. The displacement of the movable cavities allows modifying the configuration of said array. Preferably the cavities are arranged in a converging layout in the feeding direction which will be described below.

In an embodiment, said thermoforming mold comprises a first half-mold and a second half-mold, and one of said half-molds supports said movable cavities. Preferably the thermoforming mold comprises a bottom half-mold and a top half-mold. More preferably the movable cavities are inserted in the bottom half-mold.

Preferably, each of the movable cavities is associated with a respective holder and said holder is displaceable relative to the supporting half-mold. Preferably the holders are secured to the supporting half-molds by an adjustment system which defines an adjustment travel for the position of the holders on one axis or more preferably on two axes.

In an embodiment, the cavities are separated by recesses on the surface of the supporting half-mold, said recesses being preferably arranged to form a square grid. More preferably, said recesses are arranged between said form holders.

In a particularly preferred application, the machine comprises a cutting station downstream of said thermoforming mold. More preferably, the transportation system is configured to transport the sheet of thermoformable material, after the thermoforming step, from the thermoforming mold to the cutting station, while keeping a constant driving engagement with said sheet ("continuous" transportation). The sheet therefore passes from the forming step to the cutting step without leaving the engagement with the transportation system.

The driving engagement between sheet and transportation system is for example mechanical. For example, the transportation system comprises two motor-driven chains provided with teeth which engage the edges of the sheet and allow driving the sheet along the length of the machine.

By suitably positioning the movable cavities, the array of cavities assumes an arrangement such that a pitch between the cavities, perpendicular to said feeding direction, decreases along said forward feeding direction, from an input side to an output side of the thermoforming mold.

In said arrangement the thermoforming cavities converge in the forward feeding direction of the sheet of material, i.e. in the direction from the inlet side towards the outlet side of the thermoforming mold.

Said arrangement may be termed a trapezium arrangement. In said arrangement, a closed line which connects the centers of the cavities which form the contour of the array defines a trapezium or essentially trapezium-like shape.

The applicant has found that said arrangement of converging cavities is able to compensate for the shrinkage deformation effect. By means of a suitable choice of the distance between the cavities, i.e. of the variation of the pitch, said converging arrangement effectively offsets the shrinkage effect and, in particular, allows maintaining the desired centering of the articles during the transfer to a downstream cutting station.

The movable cavities may be positioned by the operator before starting the production, depending on the characteristics of the material and/or of the article and the expected amount of shrinkage. In particular, the operator may arrange the movable cavities in the aforementioned trapezium-like configuration by adjusting the pitch between the cavities depending on the expected amount of shrinkage, which depends essentially on the type of material and thermoforming process conditions of the article. The fine adjustment of the position of the movable cavities, if necessary, may be determined by a person skilled in the art also by means of test runs.

The separation recesses between the holders create tracks on the sheet which provide the sheet with a certain elasticity and better adaptation to the cutting process, as will be explained more clearly below, with the aid of an example.

The invention allows to adapt the machine to the characteristics of the material and to compensate for the effects of the shrinkage. The invention is particularly advantageous for machines with a continuous transportation between thermoforming and cutting, since it avoids or in any case reduces the loss of centering caused by the shrinkage of the material. Among other things, the invention is particularly advantageous for the thermoforming of articles made of polypropylene or made of a polypropylene multilayer.

An aspect the invention also relates to a thermoforming process according to the attached claims.

More specifically, an aspect of the invention relates to a process for thermoforming articles comprising:
feeding a sheet of thermoformable material to a thermoforming mold;
subjecting said sheet to a thermoforming process in which a plurality of articles are formed inside respective thermoforming cavities;
wherein the position of at least some of said cavities, with respect to the mold, is adjustable.

Preferably the process comprises a cutting step which separates the thermoformed articles from said sheet, wherein said cutting step is performed in a cutting mold downstream of said thermoforming mold, and the sheet is conveyed from the thermoforming mold to the cutting mold while keeping a constant driving engagement with a transportation system.

Preferably the process involves: arranging each of the movable cavities in a desired position within a respective adjustment travel; locking the movable cavities in the desired position; performing one or more thermoforming cycles. Said adjustment travel may be along one axis or along two axes.

More advantageously, said process comprises arranging the cavities of the mold in a configuration such that a spacing pitch between the cavities, perpendicular to a feeding direction of the thermoformable sheet relative to the mold, decreases in a forward feeding direction of the sheet.

Even more advantageously the process provides that the cavities are arranged in parallel rows, perpendicular to the feeding direction, each row having a respective pitch between the cavities, and the pitch between the rows decreasing in said forward feeding direction, the cavities thus converging in the forward feeding direction.

The advantages of the invention will emerge more clearly with reference to the detailed description below which is provided by way of a non-limiting example.

### Brief description of the figures

Fig. 1 illustrates in a schematic form a side view of a machine according to an embodiment of the invention.
Fig. 2 illustrates in schematic form a top plan view of the system for transporting the thermoformable sheet of the machine according to Fig. 1.
Fig. 3 shows the bottom thermoforming half-mold of the machine according to Fig. 1, in a preferred embodiment.
Fig. 4 illustrates the half-mold according to Fig. 3 showing the arrangement of the cavities.
Fig. 5 shows a holder a cavity in an embodiment of the invention.
Fig. 6 shows the bottom half-mold viewed from below.
Fig. 7 shows in schematic form a system for adjusting the position of the form holder with respect to the half-mold.
Fig. 8 shows a detail of the sheet of thermoplastic material, in an embodiment of the invention.
Fig. 9 shows a cross-section of a holder coupled to a half-mold, in an embodiment.

### Detailed description

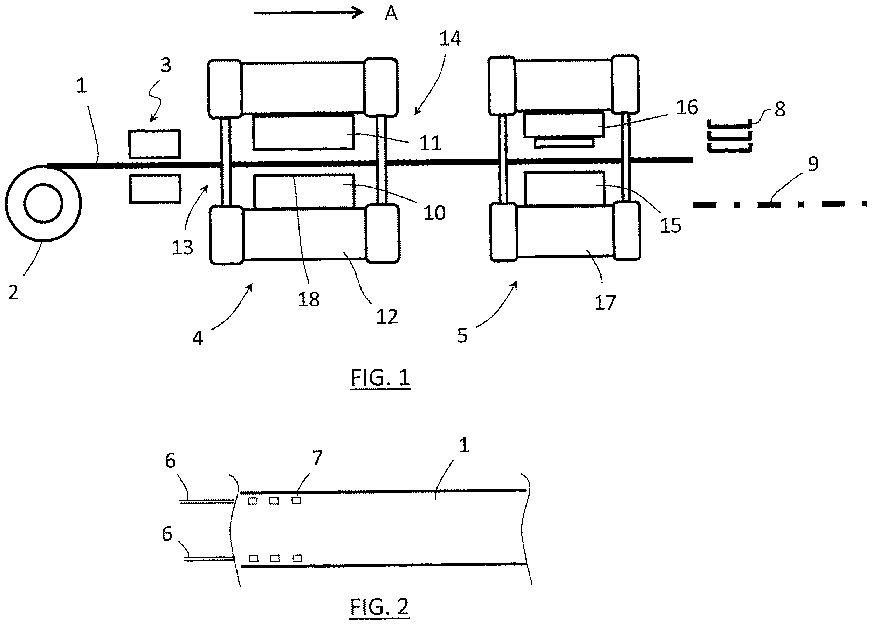

With reference to Fig. 1, in a thermoforming machine, a sheet of thermoformable material 1 is conveyed from a reel 2 into a heating unit 3, which heats the material to a temperature sufficient for thermoforming. After heating, the sheet 1 is introduced into a thermoforming mold 4; downstream of said thermoforming mold 4 the sheet is conveyed into a cutting mold 5.

It should be noted that Fig. 1 shows by way of example a reel 2, but the sheet 1 may be fed in a different way, for example by a film extruder.

The sheet of thermoformable material 1 is transported by a suitable transportation system, in an oriented feeding direction A, which also defines a forward feeding direction. In Fig. 1 said forward feeding direction is left to right.

The transportation system of the sheet 1 is configured to keep a constant engagement with the sheet 1 along the machine, and in particular without interruption, from the thermoforming mold 4 to the cutting mold 5. Consequently the sheet does not abandon the transportation system during the transfer between said two molds.

An example of a transportation system is schematically shown in Fig. 2, wherein two chains 6 are provided with teeth 7 to engage the edges of the sheet 1.

The sheet 1 for example is a multilayer sheet (or film).

The thermoforming step in the mold 4 generates, by means of plastic deformation of the sheet 1, a series of articles such as trays or small plates. The cutting mold 5 separates said articles from the sheet 1. Downstream of the cutting mold 5 a batch of thermoformed articles 8 and waste material 9 are therefore collected. The articles 8 are extracted from the cutting mold 5 by means of a suitable member known per se.

The thermoforming mold 4 comprises essentially a bottom half-mold 10 and a top half-mold 11. Said half-molds are operated by a press 12. The figure shows the mold 4 open; the press 12 allows to close the two half-molds onto the sheet 1, thus performing the thermoforming process of said sheet.

An inlet side 13 and an output side 14 of the mold 4 can be defined. The inlet inlet side 13 constitutes a hot side since the sheet comes directly from the heating unit 3; the outlet side 14, directed towards the cutting mold 5, may be termed cold side.

The cutting mold 5 is structurally similar to the mold 4 and comprises a punch assembly 15 and a die 16 with an actuating press 17. Said mold 5 can be conventional and therefore is not further described.

The thermoforming mold 4 comprises a plurality of cavities which are distributed on the upper face 18 of the bottom half-mold 10.

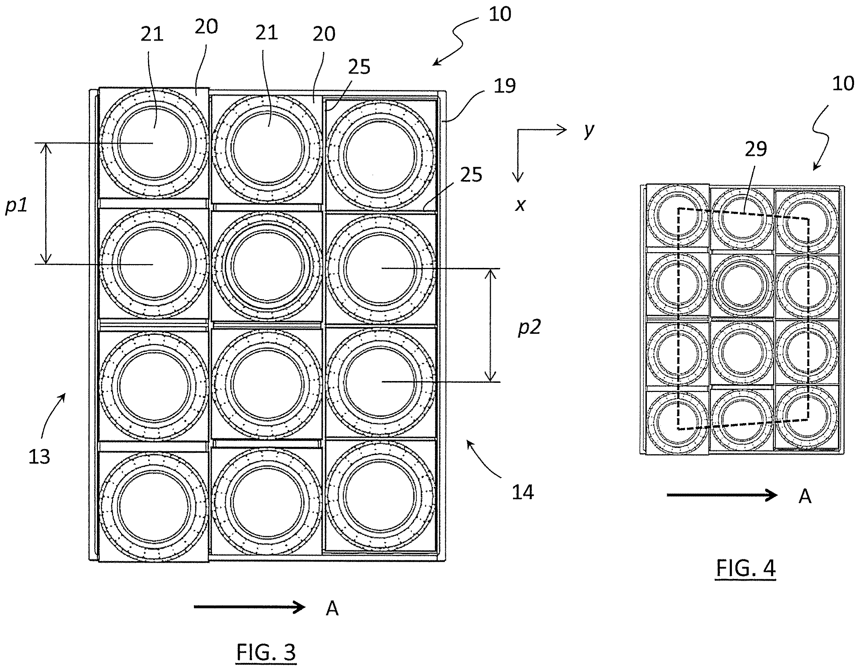

Fig. 3 shows the half-mold 10 viewed from above and in a preferred embodiment.

Said half-mold 10 has a frame 19 which carries a plurality of holders 20. Each of said holders 20 contains a cavity 21 intended to form one of the articles 8.

The holders 20 have an adjustable position, i.e. are movable, relative to the frame 19. Each holder 20 is preferably movable, with a given adjustment travel, along two adjustment axes denoted by ***x*** and ***y*** in Fig. 3. A first adjustment axis ***x*** is perpendicular to the feeding direction A, a second adjustment axis ***y*** is parallel to said direction A.

As a result of said mobility along the adjustment axes ***x*** and ***y***, the holders 20 may be arranged, advantageously, in a converging setup as shown in Fig. 3, wherein the spacing pitch between the centers of the cavities 21 decreases in the forward feeding direction A.

For example, the figure shows that the pitch **p1** between two cavities adjacent to the inlet side 13 of the mold (hot side) is greater than a spacing **p2** between two cavities adjacent to the output side 14 (cold side). The cavities are therefore arranged to converge in the forward feeding direction A, as can be noted in Fig. 3, where the cavities converge and approach each other from left to right. It can be also noted that the cavities so arranged form substantially a trapezium. Connecting the centers of the cavities gives a closed line 29 defining a trapezium, as shown in Fig. 4.

In order to allow the arrangement of the movable cavities on the half-mold, a suitable adjustment system is provided. Said adjustment system allows displacing the movable cavities and locking the cavities in the desired position.

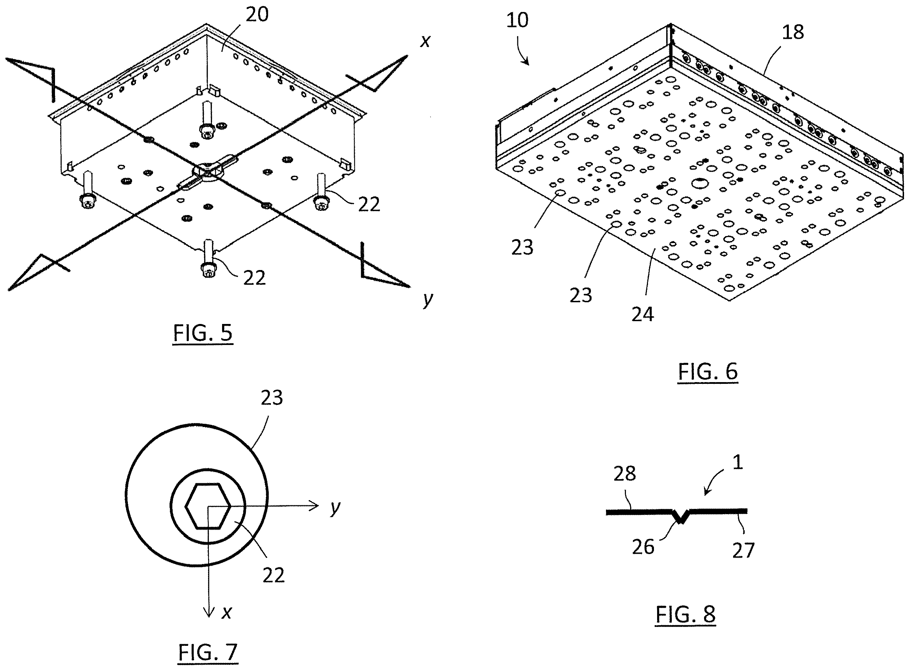

Figs. 5 to 7 show a preferred embodiment of said adjustment system. A movable holder 20 is provided with a plurality of supporting elements, for example four screws 22, which are received in seats 23 in the bottom 24 of the half-mold 10.

Said seats 23 receive the screws 22 with a certain play which gives the adjustment travel along one or two axes. In the example the seats 23 are formed by holes having a diameter greater than that of the screws 22; in other embodiments, for example, the seats 23 may have the form of eyelets with a shape other than circular, for example an elongated shape.

The screws 22 grip the bottom side of the form holder 20 against the half-mold 10. By loosening the screws 22 the holder may be displaced, within the adjustment travel allowed by the size of the holes 23. By tightening the screws 22 the operator can lock the holder 20 in the desired position.

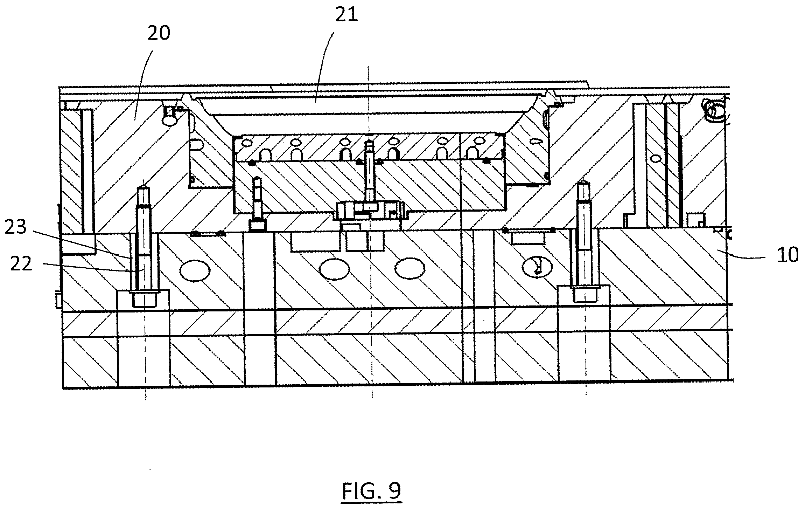

Fig. 9 shows a holder 20 in the locked position. Said figure shows that, by tightening the screws 22, the form holder 20 is locked in a desired position, within the permitted adjustment travel.

By so doing, before starting a production cycle, the operator may arrange the holders and modify the pitch of the cavities, preferably with the trapezium configuration described above, taking into account the type of material and therefore the shrinkage which will be encountered during transfer from the thermoforming mold 4 to the cutting mold 5.

In particular, and in a preferred embodiment, the transportation system remains continuously engaged with the sheet 1 between the two molds 4 and 5, i.e. for example the teeth 7 of the chains 6 remain engaged with the sheet 1. In this case, the suitable arrangement of the movable cavities compensates for the shrinkage of material and helps keep the articles centered in the cutting mold 5.

Another feature of the invention is given by a number of recesses between the holders 20 (shown in Fig. 3). The effect of said recesses 25 is shown in Fig. 8: the recesses 25 form tracks 26 in the sheet 1 (as a result of the plastic material which penetrates into the recesses 25) and each of said tracks behaves substantially in the manner of a resilient bellows, allowing for example the portions 27 and 28 to slightly move away from or towards each other. This feature provides a further self-centering capacity of the thermoformed articles on the sheet 1 during the cutting step.

### Example:

A mold, as shown in Fig. 3, comprises twelve cavities for making articles with a circular shape (plates) having a diameter of 215 mm. The material is a polypropylene sheet with a width of 1045 mm and a thickness of 0.4 mm; thermoforming is performed at a temperature of about 145 °C (inlet temperature of the sheet into the mold). Each cavity is inserted in a holder and the holders are arranged in a 3x4 array. The holders form three parallel rows perpendicular to the feeding direction of the sheet. Each holder is secured to the half-mold by means of four screws inserted into holes or eyelets which allow an adjustment travel of 3.5 mm along the two axes. Preferably, the holders are arranged in a trapezium, wherein the pitch of the row on the mold inlet side is 244.1 mm, the spacing of the central row is 243.5 mm and the spacing of the row on the output side is 242.9 mm.

## Claims

1. Thermoforming machine comprising:
a thermoforming mold (4);
a transportation system configured to transport a sheet of thermoformable material (1) through said mold in a feeding direction (A);
wherein said mold comprises an array of cavities (21), each of the cavities corresponding to an article to be thermoformed;
the machine being **characterized in that**: at least some of said cavities (21) have adjustable position being movable relative to said thermoforming mold.

2. Machine according to claim 1, wherein said movable cavities are displaceable, with respect to the mold, along at least one first adjustment axis.

3. Machine according to claim 2, wherein said first adjustment axis is perpendicular to said feeding direction.

4. Machine according to claim 2 or claim 3, wherein said movable cavities are displaceable, with respect to the mold, also along a second adjustment axis perpendicular to the first adjustment axis.

5. Machine according to any one of the preceding claims, wherein: said thermoforming mold comprises a first half-mold (10) and a second half-mold (11), and one of said half-molds, preferably a bottom half-mold, supports said movable cavities.

6. Machine according to claim 5, wherein each of said movable cavities (21) is associated with a respective holder (20) and said holder is displaceable with respect to a supporting half-mold (10).

7. Machine according to claim 6, wherein the holders (20) are secured to the supporting half-mold (10) by means of an adjustment system (22, 23) which defines an adjustment travel of the position of the holders on one or preferably two axes.

8. Machine according to any one of the preceding claims, wherein the cavities are separated by recesses (25) on the surface of the supporting half-mold, said recesses being preferably arranged to form a square grid.

9. Machine according to any one of the preceding claims, also comprising a cutting station (5) downstream of said thermoforming mold, wherein said transportation system is configured to transport the sheet (1) of thermoformable material, after the thermoforming step, from the thermoforming mold to the cutting station (5), the transportation system keeping a constant driving engagement with said sheet between said two molds.

10. Machine according to any one of the preceding claims, wherein the movable cavities (21) have an adjustment travel which allows arranging the cavities of the mold in a configuration where a pitch (*p1, p2*) between the cavities, perpendicularly to said feeding direction (A), decreases in the forward feeding direction of the sheet.

11. Machine according to claim 10, wherein the cavities are arranged in parallel rows, perpendicular to the feeding direction, each row having a respective pitch between the cavities and the pitch between the rows decreasing in the forward feeding direction of the sheet, the cavities thus converging in the forward feeding direction.

12. Process for thermoforming articles, comprising:
feeding a sheet (1) of thermoformable material to a thermoforming mold (4);
subjecting said sheet to a thermoforming process in which a plurality of articles (8) are formed inside respective thermoforming cavities (21);
wherein the position of at least some of said cavities, with respect to the mold, is adjustable.

13. Process according to claim 12, also comprising a cutting step which separates the thermoformed articles from said sheet, wherein said cutting step is performed in a cutting mold (5) downstream of said thermoforming mold, and the sheet is conveyed from the thermoforming mold to the cutting mold while keeping a constant driving engagement with a transportation system.

14. Process according to claim 12 or claim 13, wherein said sheet is a sheet of polypropylene or has a layered structure in which at least one layer is of polypropylene.

15. Process according to one of claims 12 to 14, wherein thermoforming is performed under pressure, preferably at a pressure of 6 bar or about 6 bar.
